# FASCICULE DE BREVET EUROPEEN

(11) **EP 4 482 180 B1**
(45) Date de publication et mention de la délivrance du brevet: **04.03.2026**
(21) Numéro de dépôt: 24182469.7
(22) Date de dépôt: 17.06.2024
(51) Int. Cl.: H04W 4/10, H04L 67/104, H04W 76/45, H04L 67/56, H04L 69/18

(54) **COMMUNICATION À L ALTERNAT SUR DEUX RÉSEAUX DE COMMUNICATION DIFFÉRENTS**
PUSH-TO-TALK-KOMMUNIKATION ÜBER ZWEI UNTERSCHIEDLICHE KOMMUNIKATIONSNETZE
PUSH-TO-TALK COMMUNICATION ON TWO DIFFERENT COMMUNICATION NETWORKS

(30) Priorité: 23.06.2023 FR 2306600
(43) Date de publication de la demande: 25.12.2024
(73) Titulaire: Streamwide, 75010 Paris (FR)
(72) Inventeur: ABIDI, Soufien, Tunis 1053 (TN)
(74) Mandataire: Plasseraud IP

(56) Documents cités:
- EP-A1- 3 570 632
- US-A1- 2017 041 370

## Description

### Domaine technique

La présente divulgation relève du domaine des communications à l'alternat, ou « PTT » (« Push-To-Talk »).

### Technique antérieure

Les communications à l'alternat, plus généralement connues sous la dénomination anglaise Push-To-Talk ou Press-to-transmit, sont des communications de type bidirectionnel à l'alternat (non simultanée) reposant sur l'actionnement d'un bouton physique ou virtuel par un utilisateur pour passer d'un mode réception à un mode émission *et vice versa.* Ces communications utilisent des canaux de communication en semi-duplex (« half-duplex » en anglais).

Les communications à l'alternat sont largement utilisées, notamment par les services d'urgences ou par les services de maintien de l'ordre dans le cadre de leurs opérations.

Les documents suivants représentent la technique antérieure:
- EP 3 570 632 A1
- US 2017/041370 A1.

Ces communications peuvent être améliorées.

### Résumé

A cet égard, il est proposé un procédé de communication à l'alternat entre au moins quatre terminaux de communication ;
au moins un premier terminal et un deuxième terminal de communication étant adaptés pour échanger entre eux des flux de données, correspondant à des communications à l'alternat, sur un premier réseau de communication utilisant le protocole internet ;
au moins un troisième terminal et un quatrième terminal de communication étant adaptés pour échanger entre eux des flux de données, correspondant à des communications à l'alternat, sur un deuxième réseau de communication utilisant un protocole différent du protocole internet ;
le deuxième terminal et le troisième terminal étant par ailleurs connectés à un même accessoire de communication ;
le procédé comprenant :
   - une transmission, par le quatrième terminal, à destination du troisième terminal, d'un flux de données d'une communication à l'alternat, sur un canal de diffusion à l'alternat spécifique du deuxième réseau ;
   - une transmission, par le troisième terminal, à destination de l'accessoire, d'un signal audio correspondant au flux de données de la communication à l'alternat ;
   - une transmission, par l'accessoire, à destination du deuxième terminal, d'un signal indiquant un début de transmission de données et comprenant un identifiant du canal de diffusion à l'alternat spécifique du deuxième réseau ;
   - une identification, par le deuxième terminal, d'un canal de transmission à l'alternat spécifique du premier réseau associé au canal de diffusion à l'alternat spécifique du deuxième réseau, à partir de l'identifiant de ce canal ;
   - une transmission, par l'accessoire, à destination du deuxième terminal, du signal audio correspondant au flux de données de la communication à l'alternat ;
   - une transmission, par le deuxième terminal, à destination du premier terminal, d'un flux de données d'une communication à l'alternat correspondant au signal audio reçu de l'accessoire, sur le canal de transmission à l'alternat spécifique du premier réseau.

Optionnellement, l'accessoire comprend un microphone et un haut-parleur, et préalablement à la transmission, par l'accessoire, à destination du deuxième terminal, du signal audio correspondant au flux de données de la communication à l'alternat, le procédé comprend en outre :
- une conversion du signal audio correspondant au flux de données de la communication à l'alternat en signal sonore diffusé par le haut-parleur de l'accessoire ; puis
- une conversion du signal sonore diffusé par le haut-parleur et capté par le microphone de l'accessoire en signal audio.

Optionnellement, l'identifiant du canal de diffusion à l'alternat spécifique du deuxième réseau correspond à une fréquence du canal de diffusion à l'alternat spécifique.

Optionnellement, l'identification, par le deuxième terminal, du canal de transmission à l'alternat spécifique du premier réseau associé au canal de diffusion à l'alternat spécifique du deuxième réseau, comprend :
- une sélection d'un canal de transmission à l'alternat spécifique du premier réseau associé avec l'identifiant du canal de diffusion à l'alternat spécifique du deuxième réseau dans une table de correspondance préétablie

La présente divulgation porte en outre sur un autre procédé de communication à l'alternat entre au moins quatre terminaux de communication ;
au moins un premier terminal et un deuxième terminal de communication étant configurés pour échanger des flux de données entre eux, correspondant à des communications à l'alternat, sur un premier réseau de communication utilisant le protocole internet ;
au moins un troisième terminal et un quatrième terminal de communication étant configurés pour échanger des flux de données entre eux, correspondant à des communications à l'alternat, sur un deuxième réseau de communication utilisant un protocole différent du protocole internet ;
le deuxième terminal et le troisième terminal étant par ailleurs connectés à un même accessoire de communication ;
le procédé comprenant :
   - une transmission, par le premier terminal, à destination du deuxième terminal, d'un flux de données d'une communication à l'alternat sur un canal de transmission à l'alternat spécifique du premier réseau ;
   - une identification, par le deuxième terminal, d'un canal de diffusion à l'alternat spécifique du deuxième réseau associé au canal de transmission à l'alternat spécifique du premier réseau ;
   - une transmission, par le deuxième terminal, à destination de l'accessoire, d'un signal indiquant un début de transmission de données et comprenant un identifiant du canal de diffusion à l'alternat spécifique du deuxième réseau ;
   - une transmission, par le deuxième terminal, à destination de l'accessoire, d'un signal audio correspondant au flux de données de la communication à l'alternat ;
   - une transmission, par l'accessoire, à destination du troisième terminal, d'un signal indiquant un début de transmission de données sur le canal de diffusion à l'alternat spécifique du deuxième réseau ;
   - une transmission, par l'accessoire, à destination du troisième terminal, du signal audio correspondant au flux de données de la communication à l'alternat ; et
   - une transmission, par le troisième terminal, à destination du quatrième terminal, d'un flux de données d'une communication à l'alternat correspondant au signal audio reçu de l'accessoire, sur le canal de diffusion à l'alternat spécifique du deuxième réseau.

La présente divulgation porte par ailleurs sur un terminal de communication à l'alternat adapté pour être connecté à un accessoire de communication

Dans des premiers exemples, le terminal est configuré pour effectuer des premières opérations comprenant :
après la réception d'un signal de début de transmission de données, en provenance de l'accessoire, indiquant un début de transmission de données et comprenant un identifiant d'un canal de diffusion à l'alternat spécifique d'un deuxième réseau ;
   - identifier un canal de transmission à l'alternat spécifique d'un premier réseau associé au canal de diffusion à l'alternat spécifique du deuxième réseau, à partir de l'identifiant du canal de diffusion ;
et après la réception d'un signal audio, en provenance de l'accessoire, correspondant à une communication à l'alternat émise sur le deuxième réseau :
   - envoyer un flux de données sur le canal de transmission à l'alternat spécifique du premier réseau identifié, le flux de données correspondant au signal audio reçu de l'accessoire.

Optionnellement, les premières opérations peuvent en outre comprendre au moins l'une des opérations suivantes :
- sélectionner un canal de transmission à l'alternat spécifique du premier réseau associé avec l'identifiant du canal de diffusion à l'alternat spécifique du deuxième réseau dans une table de correspondance préétablie ;
- envoyer un signal indiquant un début de transmission sur le canal de transmission à l'alternat spécifique du premier réseau déterminé ; ou
- envoyer, un signal indiquant une fin de transmission sur le canal de transmission à l'alternat spécifique, lorsque le signal audio de la communication à l'alternat est terminé ;

Dans des deuxièmes exemples, le terminal est configuré pour effectuer des deuxièmes opérations comprenant :
après la réception d'un flux de données d'une communication à l'alternat sur un canal de transmission spécifique d'un premier réseau :
   - identifier un canal de diffusion à l'alternat spécifique du deuxième réseau associé au canal de transmission à l'alternat spécifique du premier réseau ;
   - envoyer, à destination de l'accessoire, un signal indiquant un début de transmission de données et comprenant un identifiant du canal de diffusion à l'alternat spécifique du deuxième réseau ; et
envoyer, à destination de l'accessoire, un signal audio correspondant au flux de données de la communication à l'alternat reçu sur le canal de transmission spécifique du premier réseau.

Optionnellement, les deuxièmes opérations peuvent en outre comprendre l'opération suivante :
- sélectionner un canal de diffusion à l'alternat spécifique du deuxième réseau associé avec le canal de transmission à l'alternat spécifique du premier réseau dans une table de correspondance préétablie.

Optionnellement, le terminal est configuré pour effectuer les premières et les deuxièmes opérations.

La demande porte en outre sur un produit programme d'ordinateur comportant des instructions pour la mise en œuvre de l'un quelconque des procédés présentés par la présente divulgation lorsque ce programme est exécuté par au moins un processeur.

Enfin, la demande porte sur un support d'enregistrement non transitoire lisible par un ordinateur sur lequel est enregistré un programme pour la mise en œuvre de l'un quelconque des procédés présentés par la présente divulgation lorsque ce programme est exécuté par au moins un processeur.

La présente divulgation, selon ses différentes variantes de réalisation, permet ainsi à deux groupes de terminaux de communication à l'alternat, appartenant à des réseaux de communications différents, de communiquer ensemble, de sorte que du point de vue des utilisateurs des terminaux des deux groupes de communication, groupe unique de communication existe. En particulier, les architectures électroniques et réseaux des terminaux n'ont pas été modifiées pour permettre la mise en œuvre de cette solution. Les configurations d'un terminal et d'un accessoire de communication du système de communication 1 peuvent être modifiées et suffire à permettre ce fonctionnement, de sorte que la solution proposée est peu coûteuse et peu complexe à implémenter. Notamment, des terminaux existants peuvent être utilisés sans qu'il soit nécessaire de les adapter, ni structurellement, ni fonctionnellement.

### Brève description des dessins

D'autres caractéristiques, détails et avantages apparaîtront à la lecture de la description détaillée ci-après, et à l'analyse des dessins annexés, sur lesquels :
[Fig. 1] représente schématiquement un exemple de système de communication.
[Fig. 2] représente schématiquement un exemple d'accessoire selon la présente divulgation.
[Fig. 3] représente schématiquement un exemple de terminal selon la présente divulgation.
[Fig. 4] représente schématiquement un exemple de procédé de communication à l'alternat entre au moins quatre terminaux de communication.
[Fig. 5] représente schématiquement un diagramme de communication de l'exemple de procédé de communication à l'alternat entre au moins quatre terminaux de communication illustré en figure 4.
[Fig. 6] représente schématiquement un autre exemple de procédé de communication à l'alternat entre au moins quatre terminaux de communication.
[Fig. 7] représente schématiquement un diagramme de communication de l'exemple de procédé de communication à l'alternat entre au moins quatre terminaux de communication illustré en figure 6.

### Description des modes de réalisation

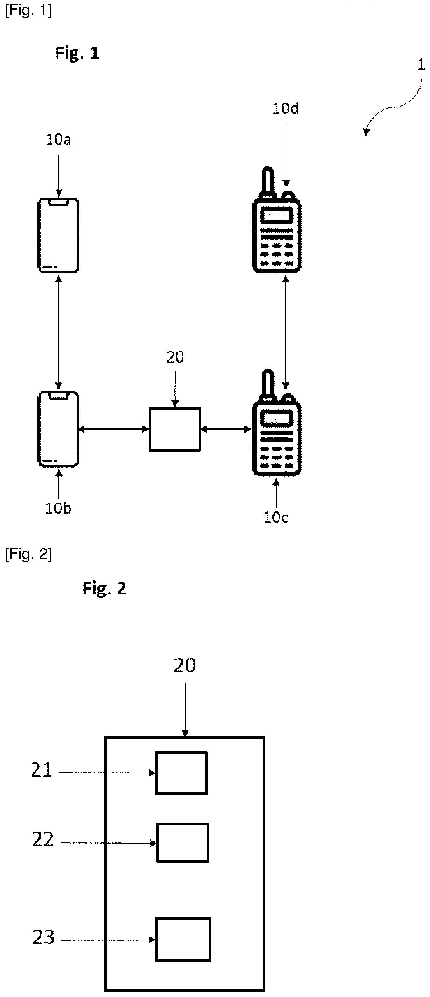

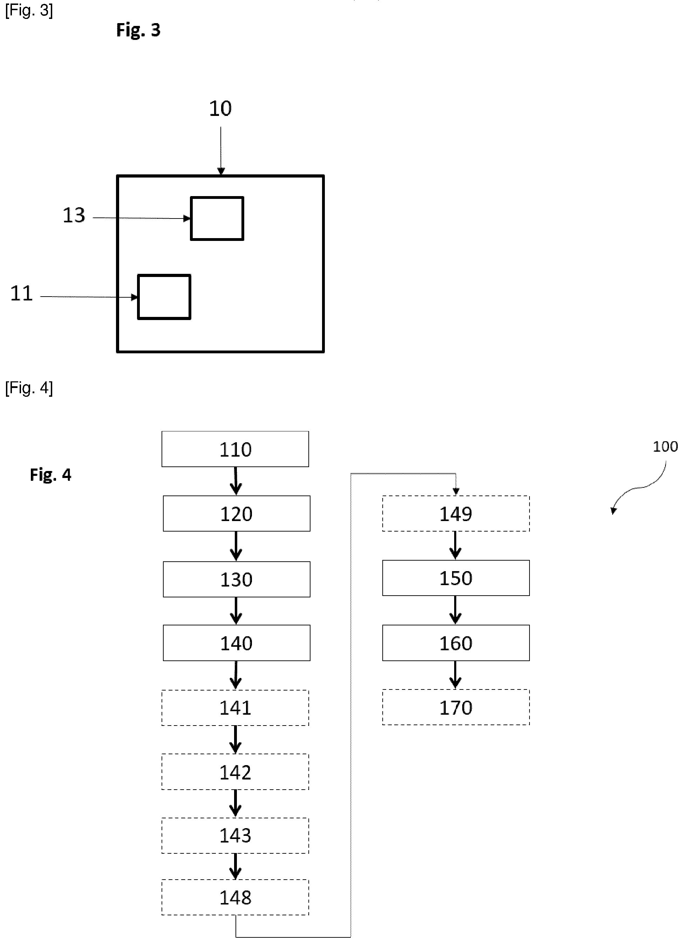

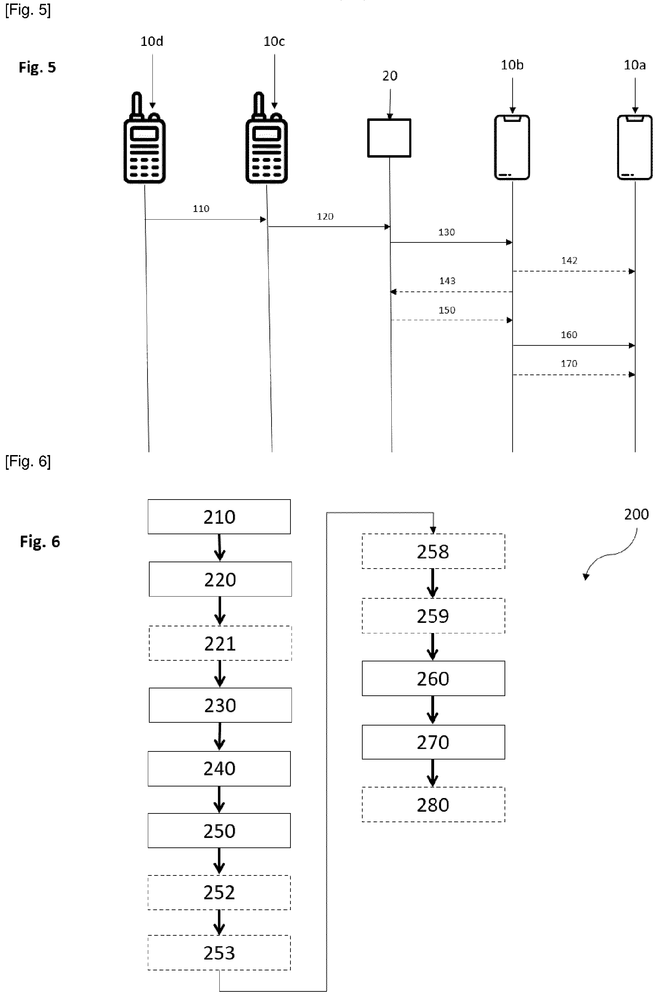

Il est maintenant décrit en référence à la figure 1 un exemple de système de communication 1 dans lequel un procédé de communication à l'alternat, dont un premier exemple est décrit en référence à la figure 4 et un deuxième exemple est décrit en référence à la figure 6, peut être mis en œuvre. Le système 1 permet l'échange de flux de données, correspondant à des communications à l'alternat, entre des terminaux de communication en utilisant notamment un accessoire de communication.

Par « terminal de communication » ou « terminal », la présente divulgation désigne un dispositif de communication configuré pour communiquer avec d'autres terminaux de communication sur un réseau de communication. Un « terminal de communication à l'alternat » désigne donc un terminal de communication configuré pour mettre en œuvre des communications à l'alternat.

Un terminal de communication peut par exemple correspondre à un ordinateur, un téléphone, un talkie-walkie. Un terminal de communication peut ainsi correspondre à un dispositif fixe, tel qu'un ordinateur de bureau, ou à un dispositif mobile, tel qu'un téléphone portable.

Par « réseau de communication » ou « réseau », la présente divulgation désigne un système interconnecté permettant l'échange de données entre différents dispositifs appartenant au réseau.

Par « flux de données », ou « flux », la présente divulgation désigne au moins deux paquets de données successifs.

Par « communication à l'alternat », la présente demande désigne des communications de type bidirectionnel non simultanées reposant sur l'actionnement d'un bouton physique ou virtuel par un utilisateur, ou d'une commande informatique équivalente, pour passer d'un mode réception à un mode émission. Ces communications à l'alternat, plus généralement connues sous la dénomination anglaise Push-To-Talk ou Press-to-transmit (ci-après PTT) utilisent des canaux de communication en semi-duplex (« half-duplex » en anglais). Ces canaux de communication en semi-duplex sont appelés canaux de transmission à l'alternat, canaux de diffusion à l'alternat ou canaux de communication à l'alternat. En particulier, dans la présente divulgation, il sera fait référence à un canal de transmission à l'alternat lorsqu'il s'agit d'un canal de communication utilisant un premier réseau de communication tandis qu'il sera fait référence à un canal de diffusion à l'alternat lorsqu'il s'agit d'un canal de communication utilisant un deuxième réseau de communication. Les premier et deuxième réseaux de communication seront détaillés dans la suite.

Il a été noté par les inventeurs que des opérationnels devant utiliser des canaux de communication à l'alternat pour communiquer et se coordonner, n'avaient pas toujours accès à des terminaux de communication permettant de communiquer sur le réseau sur lequel les canaux de communications à l'alternat sont ouverts. Ainsi, un opérationnel considéré peut avoir accès à un terminal spécifique permettant de communiquer sur un premier réseau de communication, alors que le canal de communication sur lequel il souhaite communiquer est ouvert sur un deuxième réseau de communication, différent du premier. Par conséquent, le terminal de communication spécifique de l'opérationnel ne lui permet pas de communiquer sur ce canal de communication.

Le système 1 selon la présente divulgation propose une solution à cette problématique en créant une passerelle de communication entre deux canaux de communication à l'alternat appartenant à deux réseaux de communications différents. De cette façon, un utilisateur d'un terminal de communication communiquant sur un canal de communication ouvert sur un premier réseau de communication, communique également sur un canal de communication ouvert sur un deuxième réseau de communication. Comme détaillé ci-après, le système 1 propose d'utiliser un accessoire de communication, connecté à la fois à un terminal de communication du premier réseau, et à un terminal de communication du deuxième réseau, pour transmettre les communications à l'alternat d'un réseau à l'autre. L'accessoire agit comme un relais entre les deux canaux de communication et transfère également des différents signaux relatifs à la gestion de parole entre les terminaux de communications participants des deux canaux de communication.

Le système 1 comprend au moins quatre terminaux de communication, référencés 10a à 10d sur la figure 1.

Parmi ces au moins quatre terminaux de communication, au moins un premier terminal 10a et un deuxième terminal 10b sont configurés pour échanger entre eux des flux de données, correspondant à des communications à l'alternat, sur un premier réseau utilisant le protocole internet. Le protocole internet est notamment défini dans la norme RFC 791. Un réseau utilisant le protocole internet est généralement désigné par « réseau IP », bien connu de la personne du métier. L'au moins un premier terminal 10a et un deuxième terminal 10b forment un premier groupe de terminaux de communication configurés pour échanger des communications à l'alternat entre eux sur le premier réseau.

Parmi ces au moins quatre terminaux de communication, au moins un troisième terminal 10c et un quatrième terminal 10d sont configurés pour échanger entre eux des flux de données, correspondant à des communications à l'alternat, sur un deuxième réseau utilisant un protocole différent du protocole internet. Dans des exemples, le deuxième réseau peut correspondre à un réseau utilisant un protocole radio. Le protocole radio peut par exemple correspondre à un protocole radio mobile numérique, généralement désigné par la terminologie anglaise « Digital Mobile Radio » (DMR). Le protocole de radio mobile numérique est notamment défini dans le standard TS 102 361 de l'ETSI (European Telecommunications Standards Institute), en particulier dans les parties 1 à 4. De la même façon que pour le protocole internet, le protocole de radio mobile (DMR) est bien connu de la personne du métier. L'au moins un troisième terminal 10c et un quatrième terminal 10d forment un deuxième groupe de terminaux de communication configurés pour échanger des communications à l'alternat entre eux sur le deuxième réseau, distinct du premier.

Ainsi, le système de communication 1 présenté comprend au moins quatre terminaux, décomposés en deux groupes de terminaux incluant chacun au moins deux terminaux différents. Chacun des groupes de terminaux est configuré pour échanger des flux de données, correspondant à des communications à l'alternat, sur un réseau respectif. Dans l'exemple de la figure 1, chacun des groupes de terminaux de communication comprend deux terminaux, mais on comprend que chacun de ces groupes peut en comprendre davantage.

Le système de communication 1 comprend en outre un accessoire de communication 20. L'accessoire de communication 20 est connecté, d'une part à un terminal adapté pour échanger des flux de données sur le premier réseau, et d'autre part à un autre terminal adapté pour échanger des flux de données sur le deuxième réseau. Dans l'exemple de la figure 1, l'accessoire de communication 20 est connecté à la fois au deuxième terminal 10b et au troisième terminal 10c.

Un accessoire de communication désigne, dans la présente demande, un dispositif distinct des terminaux de communication et adapté pour échanger des signaux audio, analogique ou numérique, avec au moins un terminal de communication auquel il est connecté.

Par conséquent, un protocole de communication partagé est mis en place entre un terminal spécifique et l'accessoire de communication 20 lorsque le terminal spécifique et l'accessoire de communication 20 sont connectés.

L'accessoire de communication 20 peut également être adapté pour :
1) convertir un signal sonore en signal audio analogique ou numérique ; et
2) convertir un signal audio analogique ou numérique en signal sonore.

Dans des exemples, un accessoire de communication 20 peut par exemple correspondre à une combinaison d'un microphone et d'un haut-parleur déportés. Visuellement, l'accessoire de communication peut ressembler à un « microphone haut-parleur de type poire », c'est-à-dire à un boîtier léger, de petite dimension, généralement porté au niveau de la poitrine ou de l'épaule de l'utilisateur et relié par un câble à un terminal généralement plus encombrant, plus lourd et porté à la ceinture

Dans des exemples, l'accessoire de communication 20 peut comprendre un microphone 21 adapté pour convertir un signal sonore en signal audio analogique ou numérique.

Dans des exemples, l'accessoire 20 peut comprendre un haut-parleur 22 adapté pour convertir un signal audio analogique ou numérique en signal sonore.

Dans des exemples, l'accessoire de communication 20 peut comprendre une interface de connexion 23 lui permettant de se connecter à au moins un terminal de communication 10.

Dans des exemples, l'interface de connexion 23 peut par exemple comprendre une interface sans fil configurée pour prendre en charge un protocole de communication sans fil, par exemple un protocole de communication Bluetooth, ou un protocole de communication Bluetooth Low Energy (BLE). Les protocoles de communications Bluetooth et Bluetooth Low Energy sont notamment définis dans la norme IEEE 802.15.4.

Dans des exemples, l'interface de connexion 23 peut par exemple comprendre une interface filaire configurée pour prendre en charge un protocole de communication filaire, par exemple un protocole de communication par bus série universel (« Universal Serie Bus »), généralement désigné par protocole USB.

Un exemple d'accessoire comprenant un microphone 21, un haut-parleur 22 et une interface de connexion 23 est représenté schématiquement en figure 2.

Dans les exemples représentés en figure 1 dans lesquels l'accessoire 20 est connecté à un ou plusieurs terminaux, par exemple lorsqu'il est connecté au deuxième 10b et au troisième 10c terminaux, le terminal ou les terminaux concernés peuvent également comprendre une interface de connexion 13 permettant d'établir une connexion avec l'interface de connexion 23 de l'accessoire et ainsi se connecter à l'accessoire 20. Dans ces exemples, un protocole de communication partagé est mis en œuvre entre l'accessoire 20 et un terminal 10 auquel il est connecté.

Dans des exemples, l'interface de connexion 13 d'un terminal peut comprendre une interface sans fil configurée pour prendre en charge un protocole de communication sans fil, par exemple un protocole de communication Bluetooth, ou un protocole de communication Bluetooth Low Energy (BLE).

Dans des exemples, l'interface de connexion 13 d'un terminal peut comprendre une interface filaire configurée pour prendre en charge un protocole de communication filaire, par exemple un protocole de communication par bus série universel.

Dans des exemples, un terminal 10, et notamment le deuxième terminal 10b, peut comprendre une mémoire 11 configurée pour stocker une table de correspondance entre des canaux de transmission à l'alternat du premier réseau, et des canaux de diffusion à l'alternat d'un deuxième réseau. Ces exemples seront détaillés dans la suite.

Un exemple de terminal de communication 10 comprenant une mémoire 11 et une interface de connexion 13 est représenté schématiquement en figure 3.

Le système 1 décrit permet la communication de deux groupes de terminaux à l'alternat appartenant à deux réseaux différents de manière simple, sans nécessiter de modifier l'architecture électronique des terminaux, i.e. sans modification de la partie matérielle (hardware) des terminaux. Plus précisément, le système 1 décrit permet d'associer deux groupes de communication à l'alternat appartenant à deux réseaux différents, et *a priori* incompatibles, pour former un même groupe de communication, de manière transparente pour les utilisateurs tout en en résolvant les problématiques spécifiques liées à la gestion de parole des communications à l'alternat. Notamment, lorsqu'un utilisateur d'un terminal de communication appartenant à un groupe de communication sur un premier réseau prend la parole, les utilisateurs des terminaux de communications appartenant à l'autre groupe de communication sur le deuxième réseau ne peuvent pas prendre la parole. La transmission du flux de données aux deux groupes de terminaux est ainsi réservée à l'utilisateur du premier groupe jusqu'à la fin de sa transmission de données. Cela est permis par l'utilisation astucieuse de l'accessoire de communication, connecté à la fois à un terminal du premier réseau, et à un terminal du deuxième réseau, qui agit comme un relais en transmettant des signaux indiquant un début de transmission de données (i.e. des signaux indiquant un début de prise de parole) d'un réseau à l'autre.

En référence à la figure 4, il est désormais présenté un exemple de procédé 100 de communication à l'alternat entre au moins quatre terminaux de communication. Il s'agit d'un procédé de communication entre les terminaux de communication 10a, 10b, 10c, 10d de l'exemple de système 1 présentés ci-avant et répartis en deux groupes. L'accessoire 20 est ainsi connecté à la fois au deuxième terminal 10b et au troisième terminal 10c. Un diagramme de communication représentant différentes opérations du procédé 100 est également illustré schématiquement en figure 5 afin de faciliter la compréhension du procédé 100 décrit en référence à la figure 4.

Il doit par ailleurs être noté que la figure 4 n'est qu'une illustration de l'exemple du procédé 100 représentant, par des blocs, les différentes opérations éventuellement comprises dans le procédé et décrites dans la suite. À ce titre, et sauf mention contraire, cette illustration ne traduit aucune séquentialité entre les opérations. En d'autres termes, les opérations décrites en référence à la figure 4 ne sont pas nécessairement mises en œuvre les unes à la suite des autres et peuvent être mises en œuvre dans un ordre différent de celui représenté sur la figure 4. Par ailleurs, une opération du procédé 100 peut être mise en œuvre plusieurs fois avant la mise en œuvre d'une autre opération du procédé 100. Ainsi, sauf mention contraire, la fréquence de mise en œuvre de chaque opération du procédé 100 lui est propre et n'est pas nécessairement liée à la mise en œuvre des autres opérations.

Comme illustré sur la figure 4, le procédé 100 comprend une opération 110 de transmission, par le quatrième terminal 10d, à destination du troisième terminal 10c, d'un flux de données d'une communication à l'alternat. Cette communication à l'alternat est effectuée sur un canal de diffusion spécifique du deuxième réseau de communication.

Comme illustré sur la figure 4, le procédé 100 comprend une opération 120 de transmission, par le troisième terminal 10c, à destination de l'accessoire 20, d'un signal audio. Le signal audio correspond au flux de données de la communication à l'alternat envoyé par le quatrième terminal 10d au troisième terminal 10c formaté pour pouvoir être lu par l'accessoire de communication 20. Le signal audio est envoyé conformément au protocole de connexion partagé entre le troisième terminal 10c et l'accessoire 20 pour leur connexion.

Comme illustré sur la figure 4, le procédé 100 comprend une opération 130 de transmission, par l'accessoire 20, à destination du deuxième terminal 10b, d'un signal indiquant un début de transmission de données et comprenant un identifiant du canal de diffusion à l'alternat spécifique du deuxième réseau. Dans cette opération 130, l'accessoire 20 indique au deuxième terminal 10b qu'il y a une communication sur un canal de diffusion spécifique du deuxième réseau.

Dans des exemples, l'identifiant du canal de diffusion à l'alternat spécifique du deuxième réseau peut correspondre à une fréquence du canal de diffusion à l'alternat spécifique. Notamment, lorsque le deuxième réseau utilise un protocole radio, l'identifiant peut correspondre à une fréquence du protocole radio du canal de diffusion à l'alternat spécifique, par exemple à la fréquence porteuse du canal de diffusion à l'alternat spécifique.

Comme illustré sur la figure 4, le procédé 100 comprend une opération 140 d'identification, par le deuxième terminal 10b, d'un canal de transmission à l'alternat spécifique du premier réseau associé au canal de diffusion à l'alternat spécifique du deuxième réseau, à partir de l'identifiant de ce canal. Dans cette opération 140, le deuxième terminal 10b fait le lien entre le canal de diffusion spécifique du deuxième réseau et un canal de transmission spécifique correspondant du premier réseau.

Comme illustré sur la figure 4, le procédé 100 comprend une opération 150 de transmission, par l'accessoire 20, à destination du deuxième terminal 10b, du signal audio correspondant au flux de données de la communication à l'alternat émise sur le deuxième réseau. Ainsi, l'accessoire 20 transmet un signal audio correspondant à la communication à l'alternat envoyée par le quatrième terminal 10d au troisième terminal 10c en utilisant le deuxième réseau, au deuxième terminal 10b utilisant le premier réseau.

Comme illustré sur la figure 4, le procédé 100 comprend une opération 160 de transmission, par le deuxième terminal 10b, à destination du premier terminal 10a, d'un flux de données d'une communication à l'alternat correspondant au signal audio reçu de l'accessoire 20. Ce flux de données est émis sur le canal de transmission à l'alternat spécifique du premier réseau.

Par conséquent, le procédé 100 selon la présente divulgation permet à un utilisateur émettant une communication à l'alternat sur un canal de communication d'un réseau de communication autre que le réseau IP de communiquer avec des terminaux de communication connectés à un canal de communication correspondant du réseau IP, tout en assurant la gestion de paroles entre les utilisateurs propres aux communications à l'alternat. Il est rappelé que dans les communications à l'alternat, lorsqu'un terminal communique sur un canal spécifique, les autres terminaux connectés au canal spécifique ne peuvent pas émettre.

D'autres opérations peuvent être optionnellement intégrées au procédé 100 et sont présentées dans la suite de la présente divulgation. Sauf indication contraire, ces opérations peuvent être intégrées au procédé 100 en combinaison les unes avec les autres.

Dans des exemples, l'opération d'identification 140, par le deuxième terminal 10b, du canal de transmission à l'alternat spécifique du premier réseau associé au canal de diffusion à l'alternat spécifique du deuxième réseau, peut comprendre :
- une sélection 141 d'un canal de transmission à l'alternat spécifique du premier réseau associé à l'identifiant du canal de diffusion à l'alternat spécifique du deuxième réseau dans une table de correspondance préétablie.

Dans ces exemples, le deuxième terminal 10b peut présenter la mémoire 11 configurée pour stocker la table de correspondance associant des canaux de transmission à l'alternat du premier réseau avec des identifiants de canaux de diffusion à l'alternat du deuxième réseau. Ainsi, après la réception d'un identifiant d'un canal de diffusion à l'alternat du deuxième réseau, le deuxième terminal 10b peut identifier à quel canal de transmission du premier réseau cet identifiant correspond. Il sera donc capable de transmettre le signal audio de la communication à l'alternat, reçu de l'accessoire 20, sur le canal correspondant du premier réseau.

Dans des exemples, postérieurement à l'opération d'identification 140 du canal de transmission à l'alternat spécifique, le procédé peut en outre comprendre :
- une opération 142 de transmission, par le deuxième terminal 10b, d'un signal indiquant un début de transmission sur le canal de transmission à l'alternat spécifique identifié du premier réseau.

L'opération 142 permet de réserver le canal spécifique du premier réseau en transmission pour le deuxième terminal 2b. Ce signal, dans la mesure où il est envoyé sur le canal de transmission à l'alternat spécifique du premier réseau, est notamment transmis au premier terminal 10a, comme représenté sur la figure 5.

Dans des exemples dans lesquels l'accessoire 20 comprend un microphone 21 et un haut-parleur 22, préalablement à l'opération 150 de transmission du signal audio de l'accessoire 20 au deuxième terminal 10b, le procédé 100 peut en outre comprendre :
- une opération 148 de conversion du signal audio correspondant au flux de données de la communication à l'alternat en signal sonore diffusé par le haut-parleur de l'accessoire 20 ; puis
- une opération 149 de conversion du signal sonore diffusé par le haut-parleur 22 et capté par le microphone 21 de l'accessoire 20 en signal audio.

Il s'agit dans ces exemples de transmettre le signal sonore de la communication à l'alternat diffusé en premier lieu sur le deuxième réseau vers le premier réseau en utilisant astucieusement l'accessoire 20 connecté aux deux réseaux comme diffuseur de la communication à l'alternat via son haut-parleur 22, pour l'utilisateur de l'accessoire 20, et comme enregistreur de la communication à l'alternat diffusé par le haut-parleur 22 via le microphone 21 pour les utilisateurs du premier réseau. Ainsi, du point de vue d'un utilisateur du premier terminal 10a, lorsqu'un utilisateur du quatrième terminal 10d prend la parole sur le canal de diffusion spécifique du deuxième réseau, il entend la prise de parole de l'utilisateur du quatrième terminal 10d sur le canal de transmission spécifique correspondant du premier réseau, mais cette prise de parole lui est transmise par le biais du deuxième terminal 10b également connecté au canal de transmission spécifique, et ce de manière totalement transparente. Plus généralement, chaque utilisateur d'un terminal connecté au canal de diffusion spécifique du premier réseau ou au canal de transmission spécifique du deuxième réseau entend l'utilisateur du quatrième terminal 10d de manière transparente et ne peut pas prendre la parole puisque chacun de ces canaux lui est réservé selon le principe de la communication à l'alternat.

Dans les exemples comprenant les opérations 148 et 149, préalablement à l'opération 149 de conversion, et postérieurement à l'opération d'identification 140 du canal de transmission à l'alternat spécifique, le procédé peut en outre comprendre l'opération suivante :
- une opération 143 de transmission, par le deuxième terminal 10b, à destination de l'accessoire, d'une commande d'activation du microphone 21.
L'opération 143 permet de signifier à l'accessoire 20 que le microphone 21 doit être utilisé pour capter puis transmettre le son sur le canal de transmission spécifique du premier réseau.

Dans des exemples dans lesquels le procédé 100 comprend l'opération 142, l'opération 143 est avantageusement mise en œuvre après l'étape 142 de sorte qu'un message que le microphone 21 de l'accessoire 20 commence à enregistrer, i.e. depuis la communication à l'alternat émise sur le deuxième réseau et diffusée par le haut-parleur 22, peut être directement transmis sur le canal de transmission à l'alternat spécifique du premier réseau.

Dans des exemples, le procédé 100 peut en outre comprendre une opération de transmission 170, par le deuxième terminal 10b, d'un signal indiquant une fin de transmission sur le canal de transmission à l'alternat spécifique, lorsque le signal audio de la communication à l'alternat est terminé. Ce signal, dans la mesure où il est envoyé sur le canal de transmission à l'alternat spécifique du premier réseau, est notamment transmis au premier terminal 10a, comme représenté sur la figure 5. L'opération 170 permet de relâcher le canal de transmission à l'alternat spécifique en transmission pour permettre à d'autres utilisateurs du canal de transmission à l'alternat spécifique, notamment l'utilisateur du premier terminal 1a dans l'exemple de système 1, de prendre la parole sur ce canal.

Bien entendu, les opérations du procédé 100 présentées sont pensées pour être exécutées en temps réel de sorte que dès que l'utilisateur du quatrième terminal 10d prend la parole sur le canal de diffusion spécifique du deuxième réseau, le signal de début de transmission peut être transmis quasi instantanément de l'accessoire 20 au deuxième terminal 10b qui peut réserver le canal de transmission spécifique du premier réseau pour la parole de l'utilisateur du quatrième terminal 10d.

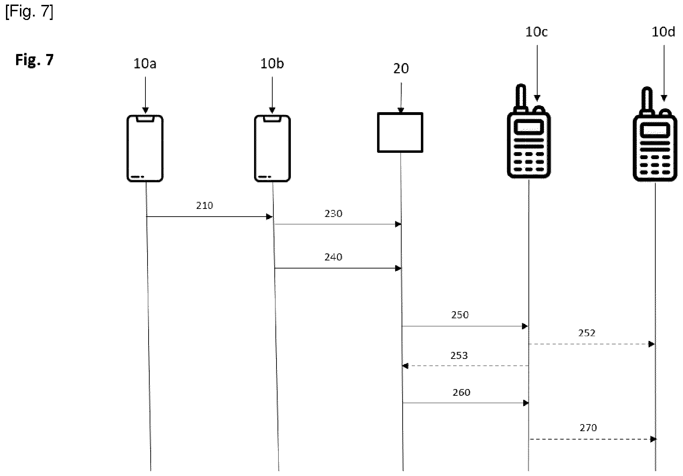

En référence à la figure 6, il est désormais présenté un autre exemple de procédé 200 de communication à l'alternat entre au moins quatre terminaux de communication. Il s'agit d'un procédé miroir de celui présenté en référence à la figure 4, la communication à l'alternat étant cette fois transmise depuis le premier réseau de communication IP vers le deuxième réseau de communication. Par conséquent, il s'agit également d'un procédé de communication entre les terminaux de communication 10a, 10b, 10c, 10d de l'exemple de système 1 avec l'accessoire 20 connecté à la fois au deuxième terminal 10b et au troisième terminal 10c. À des fins de concision, les éléments qui ont été présentés en référence au procédé 100 de la figure 4, et qui sont réutilisés dans le procédé 200 de la figure 6 ne seront pas redéveloppés une nouvelle fois. Un diagramme de communication représentant les différentes opérations du procédé 200 est illustré schématiquement en figure 7 afin de faciliter la compréhension du procédé illustré schématiquement en figure 6.

Il doit par ailleurs être noté que la figure 6 n'est qu'une illustration de l'exemple du procédé 200 représentant, par des blocs, les différentes opérations éventuellement comprises dans le procédé et décrites dans la suite du document. À ce titre, cette illustration ne traduit aucune séquentialité entre les opérations sauf lorsqu'une telle séquentialité est expressément explicitée par la présente divulgation. En d'autres termes, les opérations décrites en référence à la figure 6 ne sont pas nécessairement mises en œuvre les unes à la suite des autres et peuvent être mises en œuvre dans un ordre différent de celui représenté sur la figure 6. Par ailleurs, une opération du procédé 200 peut être mise en œuvre plusieurs fois avant la mise en œuvre d'une autre opération du procédé 200. Ainsi, sauf indication contraire, la fréquence de mise en œuvre de chaque opération du procédé 200 lui est propre et n'est pas nécessairement liée à la mise en œuvre des autres opérations.

Comme illustré sur la figure 6, le procédé 200 comprend une opération 210 de transmission, par le premier terminal 10a, à destination du deuxième terminal 10b, d'un flux de données d'une communication à l'alternat sur un canal de transmission à l'alternat spécifique du premier réseau.

Comme illustré sur la figure 6, le procédé 200 comprend une opération 220 d'identification, par le deuxième terminal 10b, d'un canal de diffusion à l'alternat spécifique du deuxième réseau associé au canal de transmission à l'alternat spécifique du premier réseau. Le deuxième terminal 2b sait sur quel canal de transmission à l'alternat spécifique du premier réseau est transmise la communication à l'alternat en provenance du premier terminal 10a. Par conséquent, il est capable, par exemple à partir d'une table de correspondance préétablie dont des exemples ont déjà présentés ci-dessus, d'identifier le canal de diffusion à l'alternat spécifique du deuxième réseau correspondant au canal de diffusion à l'alternat spécifique du premier réseau.

Comme illustré sur la figure 6, le procédé 200 comprend une opération 230 de transmission, par le deuxième terminal 10b, à destination de l'accessoire 20, d'un signal indiquant un début de transmission de données et comprenant un identifiant du canal de diffusion à l'alternat spécifique du deuxième réseau. De cette façon, l'accessoire 20 peut réserver le canal de diffusion à l'alternat spécifique en transmission.

Comme illustré sur la figure 6, le procédé 200 comprend une opération 240 de transmission, par le deuxième terminal 10b, à destination de l'accessoire 20, d'un signal audio correspondant au flux de données de la communication à l'alternat reçu du premier terminal 10a.

Comme illustré sur la figure 6, le procédé 200 comprend une opération 250 de transmission, par l'accessoire 20, à destination du troisième terminal 10c, d'un signal indiquant un début de transmission de données sur le canal de diffusion à l'alternat spécifique du deuxième réseau. Cette opération permet d'indiquer au troisième terminal 10c, qu'il va y avoir un flux de données d'un signal audio, correspondant à une communication à l'alternat, à transmettre sur le canal communication à l'alternat spécifique du deuxième réseau de façon à ce que le troisième terminal 10c puisse réserver ce canal en transmission pour la transmission future de ce signal.

Comme illustré sur la figure 6, le procédé 200 comprend une opération 260 de transmission, par l'accessoire 20, à destination du troisième terminal 10c, du signal audio correspondant au flux de données de la communication à l'alternat émise sur le premier réseau. Ainsi, l'accessoire 20 transmet un signal audio correspondant à la communication à l'alternat envoyée par le premier terminal 10a au deuxième terminal 10b en utilisant le premier réseau, au troisième terminal 10c utilisant le deuxième réseau.

Comme illustré sur la figure 7, le procédé 200 comprend une opération 270 de transmission, par le troisième terminal 10c, à destination du quatrième terminal 10d, d'un flux de données d'une communication à l'alternat correspondant au signal audio reçu de l'accessoire 20, sur le canal de diffusion à l'alternat spécifique du deuxième réseau.

Par conséquent, le procédé 200 selon la présente divulgation permet à un utilisateur émettant une communication à l'alternat sur un canal de communication d'un réseau IP de communiquer avec des terminaux de communication connectés à un canal de communication correspondant appartenant à un réseau différent du réseau IP, tout en assurant la gestion de paroles entre les utilisateurs propres aux communications à l'alternat.

D'autres opérations peuvent être optionnellement intégrées au procédé 200 et sont présentées dans la suite de la présente divulgation. Sauf indications contraires, ces opérations peuvent être intégrées au procédé 200 en combinaison les unes avec les autres.

Dans des exemples, l'opération d'identification 220, par le deuxième terminal 10b, du canal de diffusion à l'alternat spécifique du deuxième réseau associé au canal de transmission à l'alternat spécifique du premier réseau, peut comprendre :
- une sélection 221 d'un canal de diffusion à l'alternat spécifique du deuxième réseau associé au canal de transmission à l'alternat spécifique du premier réseau dans une table de correspondance préétablie.

Dans ces exemples, le deuxième terminal 10b peut présenter la mémoire 11 configurée pour stocker une table de correspondance associant des canaux de transmission à l'alternat du premier réseau avec des canaux de diffusion à l'alternat du deuxième réseau. Ainsi, lors de la réception d'un flux de données sur un canal de transmission à l'alternat du premier réseau, le deuxième terminal 10b peut identifier à quel canal de diffusion du deuxième réseau ce flux de données doit être transmis. Le deuxième terminal 10b sera donc capable de transmettre à l'accessoire 20 un signal de début de transmission associé avec un identifiant du canal de diffusion à l'alternat spécifique du deuxième réseau.

Dans des exemples, le procédé 200 peut comprendre une opération 252 de transmission, par le troisième terminal 10c, d'un signal indiquant un début de transmission de données sur le canal de diffusion à l'alternat spécifique du deuxième réseau. L'opération 252 permet de réserver le canal spécifique du deuxième réseau en transmission pour le deuxième terminal 2b. Ce signal, dans la mesure où il est envoyé sur le canal de diffusion à l'alternat spécifique du deuxième réseau, est notamment transmis au quatrième terminal 10d, comme représenté sur la figure 7.

Dans des exemples dans lesquels l'accessoire 20 comprend un microphone 21 et un haut-parleur 22, préalablement à l'opération 260 de transmission du signal audio de l'accessoire 20 au troisième terminal 10c, le procédé 200 peut en outre comprendre :
- une opération 258 de conversion du signal audio correspondant au flux de données de la communication à l'alternat en signal sonore diffusé par le haut-parleur de l'accessoire 20 ; puis
- une opération 259 de conversion du signal sonore diffusé par le haut-parleur 22 et capté par le microphone 21 de l'accessoire 20 en signal audio.

Il s'agit dans ces exemples de transmettre le signal sonore de la communication à l'alternat diffusé en premier lieu sur le premier réseau vers le deuxième réseau en utilisant l'accessoire 20 connecté aux deux réseaux comme diffuseur de la communication à l'alternat via son haut-parleur 22, pour l'utilisateur de l'accessoire 20, et comme enregistreur de la communication à l'alternat diffusé par le haut-parleur 22 via le microphone 21 pour les utilisateurs du deuxième réseau.

Dans les exemples comprenant les opérations 258 et 259, préalablement à l'opération 259 de conversion, et postérieurement à l'opération 250 de transmission, par l'accessoire 20, à destination du troisième terminal 10c, d'un signal indiquant un début de transmission de données, le procédé peut en outre comprendre :
- une opération 253 de transmission, par le troisième terminal 10c, à destination de l'accessoire 20, d'une commande d'activation du microphone 21.

L'opération 253 permet de signifier à l'accessoire 20 que le microphone 21 doit être utilisé pour capter puis transmettre le son qu'il enregistre sur le canal de diffusion spécifique du deuxième réseau.

Dans des exemples dans lesquels le procédé 200 comprend l'opération 252, l'opération 253 est avantageusement mise en œuvre après l'étape 252 de sorte qu'un message que le microphone 21 de l'accessoire 20 commence à enregistrer, i.e. depuis la communication à l'alternat émise sur le premier réseau et diffusée par le haut-parleur 22, peut être directement transmis sur le canal de diffusion à l'alternat spécifique du deuxième réseau.

Dans des exemples, le procédé 200 peut en outre comprendre une opération de transmission 280, du troisième terminal 10c, d'un signal indiquant une fin de transmission sur le canal de diffusion à l'alternat spécifique, lorsque le signal audio de la communication à l'alternat est terminé. Ce signal, dans la mesure où il est envoyé sur le canal de diffusion à l'alternat spécifique du deuxième réseau, est notamment transmis au quatrième terminal 10d, comme représenté sur la figure 7. L'opération 280 permet donc de relâcher le canal de diffusion à l'alternat spécifique pour permettre à d'autres utilisateurs du canal, notamment l'utilisateur du quatrième terminal 1d dans l'exemple de système 1, de prendre la parole sur ce canal.

Tout comme pour le procédé 100, les opérations du procédé 200 présentées sont pensées pour être exécutées en temps réel de sorte que dès que l'utilisateur du premier terminal 10a prend la parole sur le canal de transmission spécifique, le signal de début de transmission peut être quasi instantanément transmis de l'accessoire 20 au troisième terminal 10c qui peut réserver le canal de diffusion spécifique du deuxième réseau pour la parole de l'utilisateur du premier terminal 10a.

La présente divulgation porte par ailleurs sur un terminal de communication à l'alternat 10 adapté pour être connecté à un accessoire de communication 20. Le terminal de communication à l'alternat qui va être décrit ci-dessous correspond au deuxième terminal 10b, dans les procédés 100 et 200 présentés ci-dessus. Par conséquent, les opérations effectuées par le terminal 10 présenté ci-dessous présenteront les mêmes références que les opérations correspondantes présentées en référence aux procédés 100 et 200 des figures 4 et 6.

Le terminal de communication à l'alternat 10 peut comprendre la mémoire 11 configurée pour stocker une table de correspondance entre des canaux de transmission à l'alternat du premier réseau utilisant le protocole internet, et des canaux de diffusion à l'alternat d'un deuxième réseau utilisant un protocole différent du protocole internet.

Dans des premiers exemples, le terminal 10 peut être configuré pour effectuer les premières opérations suivantes :
après la réception d'un signal, en provenance de l'accessoire 20, indiquant un début de transmission de données et comprenant un identifiant d'un canal de diffusion à l'alternat spécifique du deuxième réseau :
   - déterminer 140 un canal de transmission à l'alternat spécifique du premier réseau associé au canal de diffusion à l'alternat spécifique du deuxième réseau, à partir de l'identifiant du canal de diffusion ;
et après la réception d'un signal audio, en provenance de l'accessoire 20, correspondant à une communication à l'alternat émise sur le deuxième réseau ;
   - envoyer 160 un flux de données d'une communication à l'alternat sur le canal de transmission à l'alternat spécifique du premier réseau déterminé, le flux de données de la communication à l'alternat correspondant au signal audio reçu de l'accessoire.

Dans les premiers exemples, le terminal 10 peut également être configuré pour effectuer au moins l'une des premières opérations suivantes :
- sélectionner 141 un canal de transmission à l'alternat spécifique du premier réseau associé avec l'identifiant du canal de diffusion à l'alternat spécifique du deuxième réseau dans une table de correspondance préétablie ;
- envoyer 142 un signal indiquant un début de transmission sur le canal de transmission à l'alternat spécifique du premier réseau déterminé ;
- envoyer 143 à destination de l'accessoire 20, une commande d'enregistrement du microphone 21 de l'accessoire 20 ; ou
- envoyer 170 un signal indiquant une fin de transmission sur le canal de transmission à l'alternat spécifique, lorsque le signal audio de la communication à l'alternat est terminé.

On comprend que les premiers exemples correspondent aux opérations effectuées par le terminal 10 dans le cadre du procédé 100.

Dans des deuxièmes exemples, éventuellement combinables aux premiers exemples, le terminal 10 peut être configuré pour effectuer les deuxièmes opérations suivantes :
après la réception d'un flux de données d'une communication à l'alternat sur un canal de transmission spécifique du premier réseau :
- déterminer 220 un canal de diffusion à l'alternat spécifique du deuxième réseau associé au canal de transmission à l'alternat spécifique du premier réseau ;
- envoyer 230 à destination de l'accessoire 20, un signal indiquant un début de transmission de données et comprenant un identifiant du canal de diffusion à l'alternat spécifique du deuxième réseau ; et
- envoyer 240 à destination de l'accessoire 20, un signal audio correspondant au flux de données de la communication à l'alternat reçu sur le canal de transmission spécifique du premier réseau.

Dans les deuxièmes exemples, le terminal 10 peut également être configuré pour effectuer la deuxième opération suivante :
- sélectionner 221 un canal de diffusion à l'alternat spécifique du deuxième réseau associé avec le canal de transmission à l'alternat spécifique du premier réseau dans une table de correspondance préétablie.

On comprend que les deuxièmes exemples correspondent aux opérations effectuées par le terminal 10 dans le cadre du procédé 200.

Dans la mesure où les deuxièmes exemples sont éventuellement combinables avec les premiers exemples, le terminal 10 peut donc mettre en œuvre des opérations présentées uniquement dans les premiers exemples, des opérations présentées uniquement dans les deuxièmes exemples, ou des opérations présentées à la fois dans les premiers et deuxièmes exemples.

La configuration particulière du terminal 10 selon la présente divulgation permet donc d'échanger des communications à l'alternat entre deux réseaux de communication utilisant des protocoles différents.

La présente divulgation porte en outre sur un accessoire de communication 20, adapté pour être connecté à un terminal de communication d'un premier réseau de communication et à un terminal de communication d'un deuxième réseau de communication,
le terminal de communication du premier réseau étant configuré pour échanger des flux de données, correspondant à des communications à l'alternat, sur le premier réseau utilisant le protocole internet ;
le terminal de communication du second réseau étant configuré pour échanger des flux de données, correspondant à des communications à l'alternat, sur le deuxième réseau utilisant un protocole différent du protocole internet.

L'accessoire de communication 20 qui va être décrit ci-dessous correspond à l'accessoire de communication 20 utilisé dans les procédés 100 et 200 présentés ci-dessus. Par conséquent, les opérations effectuées par l'accessoire 20 présenté ci-dessous présenteront les mêmes références que les opérations correspondantes présentées en référence aux procédés 100 et 200 des figures 4 et 6. Il doit être également noté que le terminal de communication du premier réseau dont il est question en lien avec l'accessoire 20 présenté ci-dessous correspond au deuxième terminal 10b des procédés 100 et 200 tandis que le terminal de communication du deuxième réseau dont il est question ci-dessous en lien avec l'accessoire correspond au troisième terminal 10c des procédés 100 et 200. Il n'a pas été réutilisé les terminologies « premier terminal » et « deuxième terminal » pour éviter de créer de confusion avec le premier terminal 10a et le deuxième terminal 10b faisant parti du système de communication de la figure 1. Toutefois, de telles terminologies auraient pu être utilisées en lieu et place de « terminal de communication d'un premier réseau » et « terminal de communication d'un deuxième réseau ».

Dans des premiers exemples, l'accessoire 20 peut être configuré pour effectuer l'opération suivante :
après la réception d'un signal audio correspondant à un flux de données d'une communication à l'alternat émis sur un canal de diffusion spécifique du deuxième réseau, en provenance du terminal de communication du deuxième réseau :
- envoyer 130, à destination du terminal de communication du premier réseau, un signal indiquant un début de transmission de données et comprenant un identifiant du canal de diffusion à l'alternat spécifique du deuxième réseau.

Dans des premiers exemples, l'accessoire 20 peut également être configuré pour effectuer l'opération suivante :
- envoyer 150, à destination du terminal de communication du premier réseau, un signal audio correspondant au flux de données de la communication à l'alternat reçu du terminal de communication du deuxième réseau.

Dans des deuxièmes exemples, éventuellement combinables aux premiers exemples, l'accessoire 20 peut être configuré pour effectuer l'opération suivante :
après la réception d'un signal indiquant un début de transmission de données et comprenant un identifiant du canal de diffusion à l'alternat spécifique du deuxième réseau, en provenance du terminal de communication du premier réseau :
- envoyer 250, à destination du terminal de communication du deuxième réseau, un signal indiquant un début de transmission de données et comprenant un identifiant du canal de diffusion à l'alternat spécifique du deuxième réseau.

Dans des deuxièmes exemples, l'accessoire 20 peut également être configuré pour effectuer l'opération suivante :
après la réception d'un signal audio d'une communication à l'alternat émise sur un canal de transmission spécifique du premier réseau, en provenance du terminal de communication du premier réseau :
- envoyer 260, à destination du terminal de communication du deuxième réseau, un signal audio correspondant au flux de données de la communication à l'alternat reçu du terminal de communication du premier réseau.

Dans la mesure où les deuxièmes exemples sont éventuellement combinables avec les premiers exemples, l'accessoire 20 peut donc mettre en œuvre des opérations présentées uniquement dans les premiers exemples, des opérations présentées uniquement dans les deuxièmes exemples, ou des opérations présentées à la fois dans les premiers et deuxièmes exemples.

La configuration particulière de l'accessoire 20 selon la présente divulgation permet donc d'échanger des communications à l'alternat entre deux réseaux de communication utilisant des protocoles différents.

La présente divulgation, selon ses différentes variantes de réalisation, permet ainsi à deux groupes de terminaux de communication à l'alternat, appartenant à des réseaux de communications différents, de communiquer ensemble, de sorte que du point de vue des utilisateurs des terminaux des deux groupes de communication, un groupe unique de communication existe. En particulier, les architectures électroniques et réseaux des terminaux n'ont pas été modifiées pour permettre la mise en œuvre de cette solution. Les configurations d'un terminal et d'un accessoire de communication du système de communication 1 peuvent être modifiées et suffire à permettre ce fonctionnement, de sorte que la solution proposée est peu coûteuse et peu complexe à implémenter. Notamment, des terminaux existants peuvent être utilisés sans qu'il soit nécessaire de les adapter, ni structurellement, ni fonctionnellement.

## Revendications

1. Procédé (100) de communication à l'alternat entre au moins quatre terminaux de communication ;
au moins un premier terminal (10a) et un deuxième terminal (10b) de communication étant adaptés pour échanger entre eux des flux de données, correspondant à des communications à l'alternat, sur un premier réseau de communication utilisant le protocole internet ;
au moins un troisième terminal (10c) et un quatrième terminal (10d) de communication étant adaptés pour échanger entre eux des flux de données, correspondant à des communications à l'alternat, sur un deuxième réseau de communication utilisant un protocole différent du protocole internet ;
le deuxième terminal (10b) et le troisième terminal (10c) étant par ailleurs connectés à un même accessoire de communication (20) ;
le procédé comprenant :
- une transmission (110), par le quatrième terminal (10d), à destination du troisième terminal (10c), d'un flux de données d'une communication à l'alternat, sur un canal de diffusion à l'alternat spécifique du deuxième réseau ;
- une transmission (120), par le troisième terminal (10c), à destination de l'accessoire (20), d'un signal audio correspondant au flux de données de la communication à l'alternat ;
- une transmission (130), par l'accessoire (20), à destination du deuxième terminal (10b), d'un signal indiquant un début de transmission de données et comprenant un identifiant du canal de diffusion à l'alternat spécifique du deuxième réseau ;
- une identification (140), par le deuxième terminal (10b), d'un canal de transmission à l'alternat spécifique du premier réseau associé au canal de diffusion à l'alternat spécifique du deuxième réseau, à partir de l'identifiant de ce canal ;
- une transmission (150), par l'accessoire (20), à destination du deuxième terminal (10b), du signal audio correspondant au flux de données de la communication à l'alternat ;
- une transmission (160), par le deuxième terminal (10b), à destination du premier terminal (10a), d'un flux de données d'une communication à l'alternat correspondant au signal audio reçu de l'accessoire (20), sur le canal de transmission à l'alternat spécifique du premier réseau.

2. Procédé (100) selon la revendication précédente, dans lequel l'accessoire (20) comprend un microphone (21) et un haut-parleur (22),
et dans lequel, préalablement à la transmission (150), par l'accessoire (20), à destination du deuxième terminal (10b), du signal audio correspondant au flux de données de la communication à l'alternat, le procédé comprend en outre :
- une conversion (148) du signal audio correspondant au flux de données de la communication à l'alternat en signal sonore diffusé par le haut-parleur (22) de l'accessoire (20) ; puis
- une conversion (149) du signal sonore diffusé par le haut-parleur (22) et capté par le microphone (21) de l'accessoire (20) en signal audio.

3. Procédé (100) selon l'une quelconque des revendications précédentes, dans lequel l'identifiant du canal de diffusion à l'alternat spécifique du deuxième réseau correspond à une fréquence du canal de diffusion à l'alternat spécifique.

4. Procédé (100) selon l'une quelconque des revendications précédentes, dans lequel l'identification, par le deuxième terminal (10b), du canal de transmission à l'alternat spécifique du premier réseau associé au canal de diffusion à l'alternat spécifique du deuxième réseau, comprend :
- une sélection (141) du canal de transmission à l'alternat spécifique du premier réseau associé avec l'identifiant du canal de diffusion à l'alternat spécifique du deuxième réseau dans une table de correspondance préétablie.

5. Procédé (200) de communication à l'alternat entre au moins quatre terminaux de communication ;
au moins un premier terminal (10a) et un deuxième terminal (10b) de communication étant adaptés pour échanger entre eux des flux de données, correspondant à des communications à l'alternat, sur un premier réseau de communication utilisant le protocole internet ;
au moins un troisième terminal (10c) et un quatrième terminal (10d) de communication étant adaptés pour échanger entre eux des flux de données, correspondant à des communications à l'alternat, sur un deuxième réseau de communication utilisant un protocole différent du protocole internet ;
le deuxième terminal (10b) et le troisième terminal (10c) étant par ailleurs connectés à un même accessoire de communication (20) ;
le procédé (200) comprenant :
- une transmission (210), par le premier terminal (10a), à destination du deuxième terminal (10b), d'un flux de données d'une communication à l'alternat sur un canal de transmission à l'alternat spécifique du premier réseau ;
- une identification (220), par le deuxième terminal (10b), d'un canal de diffusion à l'alternat spécifique du deuxième réseau associé au canal de transmission à l'alternat spécifique du premier réseau ;
- une transmission (230), par le deuxième terminal (10b), à destination de l'accessoire (20), d'un signal indiquant un début de transmission de données et comprenant un identifiant du canal de diffusion à l'alternat spécifique du deuxième réseau ;
- une transmission (240), par le deuxième terminal (10b), à destination de l'accessoire (20), d'un signal audio correspondant au flux de données de la communication à l'alternat ;
- une transmission (250), par l'accessoire (20), à destination du troisième terminal (10c), d'un signal indiquant un début de transmission de données sur le canal de diffusion à l'alternat spécifique du deuxième réseau ;
- une transmission, par l'accessoire (20), à destination du troisième terminal (10c), du signal audio correspondant au flux de données de la communication à l'alternat ; et
- une transmission, par le troisième terminal (10c), à destination du quatrième terminal (10d), d'un flux de données d'une communication à l'alternat correspondant au signal audio reçu de l'accessoire (20), sur le canal de diffusion à l'alternat spécifique du deuxième réseau.

6. Terminal de communication (10) à l'alternat adapté pour être connecté à un accessoire de communication (20) ;
le terminal (10) étant configuré pour effectuer des premières opérations comprenant :
après la réception d'un signal de début de transmission de données, en provenance de l'accessoire, indiquant un début de transmission de données et comprenant un identifiant d'un canal de diffusion à l'alternat spécifique d'un deuxième réseau ;
- identifier (140) un canal de transmission à l'alternat spécifique d'un premier réseau associé au canal de diffusion à l'alternat spécifique du deuxième réseau, à partir de l'identifiant du canal de diffusion ;
et après la réception d'un signal audio, en provenance de l'accessoire (20), correspondant à une communication à l'alternat émise sur le deuxième réseau :
- envoyer (160) un flux de données sur le canal de transmission à l'alternat spécifique du premier réseau identifié, le flux de données correspondant au signal audio reçu de l'accessoire ; ou
le terminal étant configuré pour effectuer des deuxièmes opérations comprenant :
après la réception d'un flux de données d'une communication à l'alternat sur un canal de transmission spécifique d'un premier réseau :
- identifier (220) un canal de diffusion à l'alternat spécifique du deuxième réseau associé au canal de transmission à l'alternat spécifique du premier réseau ;
- envoyer (230), à destination de l'accessoire, un signal indiquant un début de transmission de données et comprenant un identifiant du canal de diffusion à l'alternat spécifique du deuxième réseau ; et
- envoyer (240), à destination de l'accessoire, un signal audio correspondant au flux de données de la communication à l'alternat reçu sur le canal de transmission spécifique du premier réseau.

7. Terminal (10) selon la revendication précédente, dans lequel :
les premières opérations comprennent en outre au moins l'une des opérations suivantes :
- sélectionner (141) le canal de transmission à l'alternat spécifique du premier réseau associé avec l'identifiant du canal de diffusion à l'alternat spécifique du deuxième réseau dans une table de correspondance préétablie ;
- envoyer (142) un signal indiquant un début de transmission sur le canal de transmission à l'alternat spécifique du premier réseau déterminé ; ou
- envoyer (143) un signal indiquant une fin de transmission sur le canal de transmission à l'alternat spécifique, lorsque le signal audio de la communication à l'alternat est terminé ;
ou les deuxièmes opérations comprennent en outre :
- sélectionner (221) le canal de diffusion à l'alternat spécifique du deuxième réseau associé avec le canal de transmission à l'alternat spécifique du premier réseau dans une table de correspondance préétablie.

8. Terminal (10) selon l'une quelconque des revendications 6 à 7, dans lequel le terminal est configuré pour effectuer les premières et les deuxièmes opérations.

## Patentansprüche

1. Verfahren (100) zur Push-to-Talk-Kommunikation zwischen mindestens vier Kommunikationsendgeräten; wobei
mindestens ein erstes Kommunikationsendgerät (10a) und ein zweites Kommunikationsendgerät (10b) geeignet sind, Datenflüsse, die Push-to-Talk-Kommunikationen entsprechen, über ein erstes Kommunikationsnetz unter Verwendung des Internet-Protokolls untereinander auszutauschen;
mindestens ein drittes Kommunikationsendgerät (10c) und ein viertes Kommunikationsendgerät (10d) geeignet sind, Datenflüsse, die Push-to-Talk-Kommunikationen entsprechen, über ein zweites Kommunikationsnetz unter Verwendung eines Protokolls, das sich von dem Internet-Protokoll unterscheidet, untereinander auszutauschen;
das zweite Endgerät (10b) und das dritte Endgerät (10c) zudem mit einem gleichen Kommunikationszubehörteil (20) verbunden sind;
wobei das Verfahren aufweist:
- eine Übertragung (110) eines Datenflusses einer Push-to-Talk-Kommunikation auf einem spezifischen Push-to-Talk-Sendekanal des zweiten Netzes von dem vierten Endgerät (10d) zu dem dritten Endgerät (10c);
- eine Übertragung (120) eines Audiosignals, das dem Datenfluss der Push-to-Talk-Kommunikation entspricht, von dem dritten Endgerät (10c) zu dem Zubehörteil (20),
- eine Übertragung (130) eines Signals, das einen Datenübertragungsbeginn angibt und einen Identifikator des spezifischen Push-to-Talk-Sendekanals des zweiten Netzes aufweist, von dem Zubehörteil (20) zu dem zweiten Endgerät (10b);
- eine Identifikation (140) eines spezifischen Push-to-Talk-Übertragungskanals des ersten Netzes, der mit dem spezifischen Push-to-Talk-Sendekanal des zweiten Netztes assoziiert ist, durch das zweite Endgerät (10b) anhand des Identifikators dieses Kanals;
- eine Übertragung (150) des Audiosignals, das dem Datenfluss der Push-to-Talk-Kommunikation entspricht, von dem Zubehörteil (20) zu dem zweiten Endgerät (10b);
- eine Übertragung (160) eines Datenflusses einer Push-to-Talk-Kommunikation, der dem aus dem Zubehörteil (20) empfangenen Audiosignal entspricht, auf dem spezifischen Push-to-Talk-Übertragungskanal des ersten Netzes von dem zweiten Endgerät (10b) zu dem ersten Endgerät (10a).

2. Verfahren (100) nach dem vorstehenden Anspruch, in welchem das Zubehörteil (20) ein Mikrophon (21) und einen Lautsprecher (22) aufweist,
und in welchem vor der Übertragung (150) des Audiosignals, das dem Datenfluss der Push-to-Talk-Kommunikation entspricht, von dem Zubehörteil (20) zu dem zweiten Endgerät (10b), das Verfahren ferner aufweist:
- eine Wandlung (148) des Audiosignals, das dem Datenfluss der Push-to-Talk-Kommunikation entspricht, in ein Schallsignal, das von dem Lausprecher (22) des Zubehörteils (20) ausgesendet wird; dann
- eine Wandlung (149) des von dem Lautsprecher (22) ausgesandten und von dem Mikrophon (21) des Zubehörteils (20) erfassten Schallsignals in ein Audiosignal.

3. Verfahren (100) nach einem der vorstehenden Ansprüche, in welchem der Identifikator des spezifischen Push-to-Talk-Sendekanals des zweiten Netzes einer Frequenz des spezifischen Push-to-Talk-Sendekanals entspricht.

4. Verfahren (100) nach einem der vorstehenden Ansprüche, in welchem die von dem zweiten Endgerät (10b) durchgeführte Identifikation des spezifischen Push-to-Talk-Übertragungskanals des ersten Netzes, der mit dem spezifischen Push-to-Talk-Sendekanal des zweiten Netzes assoziiert ist, aufweist:
- eine Auswahl (141) des spezifischen Push-to-Talk-Übertragungskanals des ersten Netzes, der mit dem Identifikator des spezifischen Push-to-Talk-Sendekanals des zweiten Netzes assoziiert ist, in einer vorab erstellten Korrespondenztabelle.

5. Verfahren (200) zur Push-to-Talk-Kommunikation zwischen mindestens vier Kommunikationsendgeräten; wobei
mindestens ein erstes Kommunikationsendgerät (10a) und ein zweites Kommunikationsendgerät (10b) geeignet sind, Datenflüsse, die Push-to-Talk-Kommunikationen entsprechen, über ein erstes Kommunikationsnetz unter Verwendung des Internet-Protokolls untereinander auszutauschen;
mindestens ein drittes Kommunikationsendgerät (10c) und ein viertes Kommunikationsendgerät (10d) geeignet sind, Datenflüsse, die Push-to-Talk-Kommunikationen entsprechen, über ein zweites Kommunikationsnetz unter Verwendung eines Protokolls, das sich von dem Internet-Protokoll unterscheidet, untereinander auszutauschen;
das zweite Endgerät (10b) und das dritte Endgerät (10c) zudem mit einem gleichen Kommunikationszubehörteil (20) verbunden sind;
wobei das Verfahren (200) aufweist:
- eine Übertragung (210) eines Datenflusses einer Push-to-Talk-Kommunikation auf einem spezifischen Push-to-Talk-Übertragungskanal des ersten Netzes von dem ersten Endgerät (10a) zu dem zweiten Endgerät (10b);
- eine Identifikation (220) eines spezifischen Push-to-Talk-Sendekanals des zweiten Netzes, der mit dem spezifischen Push-to-Talk-Übertragungskanal des ersten Netzes assoziiert ist, durch das zweite Endgerät (10b);
- eine Übertragung (230) eines Signals, das einen Datenübertragungsbeginn angibt und einen Identifikator des spezifischen Push-to-Talk-Sendekanals des zweiten Netzes aufweist, von dem zweiten Endgerät (10b) zu dem Zubehörteil (20);
- eine Übertragung (240) eines Audiosignals, das dem Datenfluss der Push-to-Talk-Kommunikation entspricht, von dem zweiten Endgerät (10b) zu dem Zubehörteil (20);
- eine Übertragung (250) eines Signals, das einen Datenübertragungsbeginn angibt, auf dem spezifischen Push-to-Talk-Sendekanal des zweiten Netzes von dem Zubehörteil (20) zu dem dritten Endgerät (10c);
- eine Übertragung des Audiosignals, das dem Datenfluss der Push-to-Talk-Kommunikation entspricht, von dem Zubehörteil (20) zu dem dritten Endgerät (10c); und
- eine Übertragung eines Datenflusses einer Push-to-Talk-Kommunikation, der dem aus dem Zubehörteil (20) empfangenen Audiosignal entspricht, auf dem spezifischen Push-to-Talk-Sendekanal des zweiten Netzes von dem dritten Endgerät (10c) zu dem vierten Endgerät (10d).

6. Push-to-Talk-Kommunikationsendgerät (10), dass geeignet ist, um mit einem Kommunikationszubehörteil (20) verbunden zu werden;
wobei das Endgerät (10) konfiguriert ist, erste Operationen durchzuführen, die aufweisen:
nach dem Empfang eines von dem Zubehörteil herkommenden Datenübertragungsbeginn-Signals, das einen Datenübertragungsbeginn angibt und einen Identifikator eines spezifischen Push-to-Talk-Sendekanals eines zweiten Netzes aufweist,
- Identifizieren (140) eines spezifischen Push-to-Talk-Übertragungskanals eines ersten Netzes, der mit dem spezifischen Push-to-Talk-Sendekanal des zweiten Netzes assoziiert ist, anhand des Identifikators des Sendekanals;
und nach dem Empfang eines von dem Zubehörteil (20) herkommenden Audiosignals, das einer von dem zweiten Netz emittierten Push-to-Talk-Kommunikation entspricht;
- Schicken (160) eines Datenflusses auf dem identifizieren spezifischen Push-to-Talk-Übertragungskanal des ersten Netzes, wobei der Datenfluss dem aus dem Zubehörteil empfangenen Audiosignal entspricht; oder
wobei das Endgerät konfiguriert ist, zweite Operationen durchzuführen, die aufweisen:
nach dem Empfang eines Datenflusses einer Push-to-Talk-Kommunikation auf einem spezifischen Übertragungskanal des ersten Netzes,
- Identifizieren (220) eines spezifischen Push-to-Talk-Sendekanals des zweiten Netzes, der mit dem spezifischen Push-to-Talk-Übertragungskanal des ersten Netzes assoziiert ist;
- Schicken (230) eines Signals, das einen Datenübertragungsbeginn angibt und einen Identifikator des spezifischen Push-to-Talk-Sendekanals des zweiten Netzes aufweist, zu dem Zubehörteil; und
- Schicken (240) eines Audiosignals, das dem empfangenen Datenfluss der Push-to-Talk-Kommunikation entspricht, auf dem spezifischen Übertragungskanal des ersten Netzes zu dem Zubehörteil.

7. Endgerät (10) nach dem vorstehenden Anspruch, in welchem:
die ersten Operationen ferner mindestens eine der folgenden Operationen aufweisen:
- Auswählen (141) des spezifischen Push-to-Talk-Übertragungskanals des ersten Netzes, der mit dem Identifikator des spezifischen Push-to-Talk-Sendekanals des zweiten Netzes assoziiert ist, in einer vorab erstellten Korrespondenztabelle;
- Schicken (142) eines Signals, das einen Übertragungsbeginn angibt, auf dem bestimmten (ausgewählten) spezifischen Push-to-Talk-Übertragungskanal des ersten Netzes; oder
- Schicken (143) eines Signals, das ein Übertragungsende angibt, auf dem spezifischen Push-to-Talk-Übertragungskanal, wenn das Audiosignal der Push-to-Talk-Kommunikation beendet ist;
oder die zweiten Operationen ferner aufweisen:
- Auswählen (221) des spezifischen Push-to-Talk-Sendekanals des zweiten Netzes, der mit dem spezifischen Push-to-Talk-Übertragungskanal des ersten Netzes assoziiert ist, in einer vorab erstellten Korrespondenztabelle.

8. Endgerät (10) nach einem der Ansprüche 6 bis 7, in welchem das Endgerät konfiguriert ist, die ersten und zweiten Operationen durchzuführen.

## Claims

1. A method (100) for push-to-talk communication between at least four communication terminals;
at least one first terminal (10a) and one second communication terminal (10b) being adapted to exchange with each other data streams, corresponding to push-to-talk communications, on a first communication network using the Internet protocol;
at least one third terminal (10c) and one fourth communication terminal (10d) being adapted to exchange with each other data streams, corresponding to push-to-talk communications, on a second communication network using a protocol different from the Internet protocol;
the second terminal (10b) and the third terminal (10c) being further connected to a same communication accessory (20);
the method comprising:
- transmitting (110), by the fourth terminal (10d), to the third terminal (10c), a data stream of a push-to-talk communication, on a specific push-to-talk broadcast channel specific to the second network;
- transmitting (120), by the third terminal (10c), to the accessory (20), an audio signal corresponding to the data stream of the push-to-talk communication;
- transmitting (130), by the accessory (20), to the second terminal (10b), a signal indicating a start of data transmission and comprising an identifier of the push-to-talk broadcast channel specific to the second network;
- identifying (140), by the second terminal (10b), a push-to-talk transmission channel specific to the first network associated with the push-to-talk broadcast channel specific to the second network, from the identifier of this channel;
- transmitting (150), by the accessory (20), to the second terminal (10b), the audio signal corresponding to the data stream of the push-to-talk communication;
- transmitting (160), by the second terminal (10b), to the first terminal (10a), a data stream of a push-to-talk communication corresponding to the audio signal received from the accessory (20), on the push-to-talk transmission channel specific to the first network.

2. The method (100) according to the preceding claim, wherein the accessory (20) comprises a microphone (21) and a loudspeaker (22),
and wherein, prior to transmitting (150), by the accessory (20), to the second terminal (10b), the audio signal corresponding to the data stream of the push-to-talk communication, the method further comprises:
- converting (148) the audio signal corresponding to the data stream of the push-to-talk communication into an audible signal broadcast by the loudspeaker (22) of the accessory (20); then
- converting (149) the audible signal broadcast by the loudspeaker (22) and captured by the microphone (21) of the accessory (20) into an audio signal.

3. The method (100) according to any one of the preceding claims, wherein the identifier of the push-to-talk broadcast channel specific to the second network corresponds to a frequency of the specific push-to-talk broadcast channel.

4. The method (100) according to any one of the preceding claims, wherein identifying, by the second terminal (10b), the push-to-talk transmission channel specific to the first network associated with the push-to-talk broadcast channel specific to the second network, comprises:
- selecting (141) the push-to-talk transmission channel specific to the first network associated with the identifier of the push-to-talk broadcast channel specific to the second network in a pre-established look-up table.

5. A method (200) for push-to-talk communication between at least four communication terminals;
at least one first terminal (10a) and one second communication terminal (10b) being adapted to exchange with each other data streams, corresponding to push-to-talk communications, on a first communication network using the Internet protocol;
at least one third terminal (10c) and one fourth communication terminal (10d) being adapted to exchange with each other data streams, corresponding to push-to-talk communications, on a second communication network using a protocol different from the Internet protocol;
the second terminal (10b) and the third terminal (10c) being further connected to a same communication accessory (20);
the method (200) comprising:
- transmitting (210), by the first terminal (10a), to the second terminal (10b), a data stream of a push-to-talk communication on a push-to-talk transmission channel specific to the first network;
- identifying (220), by the second terminal (10b), a push-to-talk broadcast channel specific to the second network associated with the push-to-talk transmission channel specific to the first network;
- transmitting (230), by the second terminal (10b), to the accessory (20), a signal indicating a start of data transmission and comprising an identifier of the push-to-talk broadcast channel specific to the second network;
- transmitting (240), by the second terminal (10b), to the accessory (20), an audio signal corresponding to the data stream of the push-to-talk communication;
- transmitting (250), by the accessory (20), to the third terminal (10c), a signal indicating a start of data transmission on the push-to-talk broadcast channel specific to the second network;
- transmitting, by the accessory (20), to the third terminal (10c), the audio signal corresponding to the data stream of the push-to-talk communication; and
- transmitting, by the third terminal (10c), to the fourth terminal (10d), a data stream of a push-to-talk communication corresponding to the audio signal received from the accessory (20), on the push-to-talk broadcast channel specific to the second network.

6. A push-to-talk communication terminal (10) adapted to be connected to a communication accessory (20);
the terminal (10) being configured to perform first operations comprising:
after receiving a data transmission start signal, originating from the accessory, indicating a start of data transmission and comprising an identifier of a push-to-talk broadcast channel specific to a second network;
- identifying (140) a push-to-talk transmission channel specific to a first network associated with the push-to-talk broadcast channel specific to the second network, from the identifier of the broadcast channel;
and after receiving an audio signal, originating from the accessory (20), corresponding to a push-to-talk communication emitted on the second network:
- sending (160) a data stream on the identified push-to-talk transmission channel specific to the first network, the data stream corresponding to the audio signal received from the accessory; or
the terminal being configured to perform second operations comprising:
after receiving a data stream of a push-to-talk communication on a transmission channel specific to a first network:
- identifying (220) a push-to-talk broadcast channel specific to the second network associated with the push-to-talk transmission channel specific to the first network;
- sending (230), to the accessory, a signal indicating a start of data transmission and comprising an identifier of the push-to-talk broadcast channel specific to the second network; and
- sending (240), to the accessory, an audio signal corresponding to the data stream of the push-to-talk communication received on the transmission channel specific to the first network.

7. The terminal (10) according to the preceding claim, wherein:
the first operations further comprise at least one of the following operations:
- selecting (141) the push-to-talk transmission channel specific to the first network associated with the identifier of the push-to-talk broadcast channel specific to the second network in a pre-established look-up table;
- sending (142) a signal indicating a start of transmission on the determined push-to-talk transmission channel specific to the first network; or
- sending (143) a signal indicating an end of transmission on the specific push-to-talk transmission channel, when the audio signal of the push-to-talk communication is completed;
or the second operations further comprise:
- selecting (221) the push-to-talk broadcast channel specific to the second network associated with the push-to-talk transmission channel specific to the first network in a pre-established look-up table.

8. The terminal (10) according to any one of claims 6 to 7, wherein the terminal is configured to perform the first and second operations.
